# EUROPEAN PATENT APPLICATION

(11) **EP 4 425 604 A1**
(43) Date of publication of application: **04.09.2024**
(21) Application number: 22945247.9
(22) Date of filing: 08.06.2022
(51) Int. Cl.: H01M 4/1391, H01M 4/62

(54) **SECONDARY BATTERY AND PREPARATION METHOD THEREFOR, AND ELECTRIC DEVICE**

(71) Applicant: Contemporary Amperex Technology Co., Limited, Ningde, Fujian 352100 (CN)
(72) Inventor: DENG, Kaiming, Ningde, Fujian 352100 (CN); LU, Lei, Ningde, Fujian 352100 (CN); WANG, Yalong, Ningde, Fujian 352100 (CN); WANG, Zheng, Ningde, Fujian 352100 (CN); YU, Linzhen, Ningde, Fujian 352100 (CN); HU, Changyuan, Ningde, Fujian 352100 (CN); LI, Shisong, Ningde, Fujian 352100 (CN); DAI, Shunhao, Ningde, Fujian 352100 (CN)
(74) Representative: Kraus & Lederer PartGmbB
(86) International application number: PCT/CN2022/097615
(87) International publication number: WO 2023/236102

(57) **Abstract**

The present application provides a secondary battery including an electrode sheet, the electrode sheet including: a current collector and an active material layer; the active material layer is provided on at least one surface of the current collector; the active material layer is divided into a first region and a second region in its thickness direction; the first region is located in a direction close to the surface of the current collector, the thickness of the first region accounts for 1/2 of the thickness of the active material layer, the binder content in the first region is denoted as A; the second region is located in a direction away from the surface of the current collector, the thickness of the second region accounts for 1/2 of the thickness of the active material layer, and the binder content in the first region is denoted as B; the electrode sheet satisfies: 1<B/A≤1.04.

## Description

### Technical Field

The present application relates to the field of secondary batteries, and in particular to a secondary battery, a method for preparing the same and an electrical apparatus.

### Background

With the present application and promotion of power batteries in the field of electric vehicles, the demand for secondary batteries such as lithium-ion batteries continues to increase, and higher requirements are placed on the cycling performance and dynamic performance of secondary batteries. The fine structure of the electrode sheet will directly affect the wetting effect of the electrolyte solution, thereby affecting important properties such as internal resistance, rate performance and cycling performance of the battery. The material of the electrode sheet made by the traditional process usually presents an uneven gradient distribution. Especially if the coating weight of the electrode sheet is increased in order to improve the energy density, this uneven material distribution is more obvious, which has a negative impact on the rate performance and cycling performance of the battery.

### Summary of the Invention

Based on the above problems, the present application provides a secondary battery, a method for preparing the same, and an electrical apparatus, which can improve the cycling performance and dynamic performance of the secondary battery.

One aspect of the present application provides a secondary battery including an electrode sheet, the electrode sheet including: a current collector; and an active material layer provided on at least one surface of the current collector; the active material layer is divided into a first region and a second region in its thickness direction; the first region is located in a direction close to the surface of the current collector, the thickness of the first region accounts for 1/2 of the thickness of the active material layer, the binder content in the first region is denoted as A; the second region is located in a direction away from the surface of the current collector, the thickness of the second region accounts for 1/2 of the thickness of the active material layer, and the binder content in the first region is denoted as B; the electrode sheet satisfies: 1<B/A≤1.04.

In the above-mentioned secondary battery, the binder content of the electrode sheet is controlled so that the electrode sheet satisfies: 1<B/A≤1.04, which can effectively improve the problem of enrichment of the binder on the surface of the active material layer, and improve the surface porosity of the electrode sheet, thereby improving the cycling performance and dynamic performance of the secondary battery.

In some of the embodiments, the electrode sheet satisfies: 1.01≤B/A≤1.03.

In some of the embodiments, the thickness of the active material layer is 40 µm to 180 µm; optionally, the thickness of the active material layer is 60 µm to 100 µm.

In some of the embodiments, the porosity of the first region is 25% to 30%.

In some of the embodiments, the porosity of the second region is 25% to 30%.

In some of the embodiments, the porosity of the first region differs by ≤5% from the porosity of the second region.

In some of the embodiments, the porosity of the first region is the same as the porosity of the second region.

In some of the embodiments, the active material layer is self-supporting.

In some of the embodiments, the tensile strength of the active material layer is 0.03 MPa to 1 MPa; optionally, the tensile strength of the active material layer is 0.05 MPa to 0.5 MPa.

In some of the embodiments, the electrode sheet is a positive electrode sheet; in the active material layer, the binder includes at least one of polyvinylidene fluoride, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resin.

In some of the embodiments, the electrode sheet is a negative electrode sheet; in the active material layer, the binder includes a polymer with a polar functional group; optionally, the polar functional group is selected from at least one of carboxyl, cyano and amino.

In some of the embodiments, the weight average molecular weight of the polymer is ≥ 200,000; optionally, the weight average molecular weight of the polymer is 300,000 to 800,000.

In some of the embodiments, the polymer is selected from at least one of chain polymers and cross-network polymers.

In some of the embodiments, the polymer is selected from at least one of polyacrylonitrile, polyacrylic acid, polyamide, acrylic acid-acrylonitrile copolymer and derivatives thereof, acrylic acid-acrylate copolymer and derivatives thereof, acrylic acid-acrylamide copolymer and derivatives thereof.

In some of the embodiments, in the active material layer, the mass percentage of the binder is 0.5% to 5%.

In some of the embodiments, the active material layer further includes additives, and the additive includes at least one of polytetrafluoroethylene, polyethylene, polypropylene, and polyacrylonitrile; optionally, the mass percentage of the additive is ≤2%.

In a second aspect, the present application provides a method for preparing a secondary battery, comprising preparing an electrode sheet by using the following steps:
preparing an electrode sheet slurry with a solid content greater than or equal to 65%;
extruding the electrode sheet slurry to prepare an active material layer; and
compounding the active material layer with a current collector to prepare the electrode sheet;
wherein the active material layer is provided on at least one surface of the current collector; the active material layer is divided into a first region and a second region in its thickness direction; the first region is located in a direction close to the surface of the current collector, the thickness of the first region accounts for 1/2 of the thickness of the active material layer, the binder content in the first region is denoted as A; the second region is located in a direction away from the surface of the current collector, the thickness of the second region accounts for 1/2 of the thickness of the active material layer, and the binder content in the first region is denoted as B; the electrode sheet satisfies: 1<B/A≤1.04.

In some of the embodiments, the electrode sheet is a negative electrode sheet, and the solid content of the electrode sheet slurry is 68% to 74%.

In some of the embodiments, the electrode sheet is a positive electrode sheet, and the solid content of the electrode sheet slurry is 75% to 80%.

In a third aspect, the present application further provides an electrical apparatus including the above-mentioned secondary battery or the secondary battery manufactured by the above-mentioned method for preparing a secondary battery.

The details of one or more embodiments of the present application are set forth in the accompanying drawings and the description below, and other features, objectives, and advantages of the present application will become apparent from the specification, drawings, and claims.

### Description of Drawings

Fig. 1 is a schematic diagram of a secondary battery according to an embodiment of the present application;
Fig. 2 is an exploded view of the secondary battery according to an embodiment of the present application shown in Fig. 1;
Fig. 3 is a schematic diagram of a battery module according to an embodiment of the present application;
Fig. 4 is a schematic diagram of a battery pack according to an embodiment of the present application;
Fig. 5 is an exploded view of the battery pack according to an embodiment of the present application shown in Fig. 4;
Fig. 6 is a schematic diagram of an electrical apparatus according to an embodiment of the present application in which a secondary battery is used as a power source;
Fig. 7 is a scanning electron microscopy (SEM) image of the surface of the negative electrode sheet in Example 1 of the present application;
Fig. 8 is a scanning electron microscopy (SEM) image of the surface of the negative electrode sheet in Comparative Example 1 of the present application;

### Description of reference numerals:

1 battery pack; 2 upper box; 3 lower box; 4 battery module; 5 secondary battery; 51 case; 52 electrode assembly; 53 cover plate; 6 electrical apparatus.

In order to better describe and illustrate embodiments and/or examples of the inventions disclosed herein, reference is made to one or more of the drawings. Additional details or examples used to describe the drawings should not be considered limitations on the scope of any of the disclosed inventions, the presently described embodiments and/or examples, and the best mode of these inventions currently understood.

### Detailed Description

In order to facilitate the understanding of the present application, the present application will be described more fully below with reference to the relevant drawings. Preferred embodiments of the present application are shown in the accompanying drawings. However, the present application can be embodied in many different forms and is not limited to the embodiments described herein. On the contrary, the purpose of providing these embodiments is to make the understanding of the disclosure of the present application more thorough and comprehensive.

Unless otherwise defined, all technical and scientific terms used herein have the same meaning as commonly understood by one of ordinary skill in the art to which the present application belongs. The terms used herein in the specification of the present application are only for the purpose of describing specific embodiments, and are not intended to limit the present application. As used herein, the term "and/or" includes any and all combinations of one or more of the associated listed items.

The fine structure (such as surface porosity and binder distribution) of the electrode sheet will directly affect the wetting effect of the electrolyte solution, thereby affecting important properties such as internal resistance, rate performance and cycling performance of the battery. Under the work of continuously improving and increasing the energy density, increasing the weight of active material per unit area of the electrode sheet (an increase of ≥ 40%) can greatly reduce the amount of the current collector substrate and separator substrate used, and realize increased energy density. However, the increase in the weight of the active material per unit area will lead to an uneven gradient distribution of the material of the electrode sheet in the longitudinal direction.

After a lot of research by the inventors, during the drying process of the electrode sheet (especially near the transition point (the junction where the upper layer of the electrode sheet has been dried and the lower layer has not been dried)), the solvent in the upper layer of the active material layer volatilizes first, and the solvent in the lower layer ascends rapidly. Therefore, due to the following reasons, the solvent carries the binder of small molecules during the ascending process, thereby causing the binder to float: (1) surface tension; (2) concentration gradient; (3) capillary action; (4) thermodynamic movement of solid particles; (5) density difference between particles (particle settlement causes density difference between upper and lower layers). In addition, as the coating speed increases, the drying temperature needs to be further increased, and the surface tension of the solvent will be further reduced, resulting in a further increase in the surface tension difference between the upper dry electrode active material layer and the solvent, making it easier for the solvent to migrate and spread upwards, and the binder easier to float.

During the drying process of the electrode sheet, the binder floats, which will cause the surface layer of the electrode sheet to be enriched with the binder, and the surface layer of the electrode sheet is likely to be densified after cold pressing. On the one hand, the dense surface layer of the electrode sheet will make it difficult for the electrolyte solution to wet, which will seriously affect the production efficiency of the secondary battery; on the other hand, the low porosity of the surface layer of the electrode sheet will make it difficult for active ions to shuttle in the electrode sheet, reducing the rate performance and low-temperature performance. In addition, if it is difficult to wet the electrode sheet, the electrochemical reaction cannot be realized in the area not sufficiently wetted, resulting in risks such as abnormal battery performance and precipitation of active material metals (such as lithium plating) at the interface. Therefore, the fine structure of the electrode sheet directly affects the wetting effect of the electrolyte solution, thereby affecting important properties such as battery internal resistance, battery rate performance and service life.

The present application provides a secondary battery, and a battery module, battery pack and electrical apparatus using the secondary battery. This secondary battery is applicable to various electrical apparatuses using batteries, such as mobile phones, portable apparatuses, laptops, battery vehicles, electric toys, electric tools, electric vehicles, ships, spacecrafts, and the like. For example, the spacecrafts include airplanes, rockets, space shuttles, spaceships, etc.

An embodiment of the present application provides an electrode sheet, including: a current collector and an active material layer. The active material layer is provided on at least one surface of the current collector; the active material layer is divided into a first region and a second region in its thickness direction. The first region is located in a direction close to the surface of the current collector, the thickness of the first region accounts for 1/2 of the thickness of the active material layer, and the binder content in the first region is denoted as A; the second region is located in a direction away from the surface of the current collector, the thickness of the second region accounts for 1/2 of the thickness of the active material layer, and the binder content in the first region is denoted as B; the electrode sheet satisfies: 1<B/A≤1.04.

The inventors found that in the electrode sheet prepared by the traditional process, the binder presents an obviously uneven gradient distribution in the thickness direction of the active material layer, resulting in a large amount of binder enriched on the surface of the electrode sheet, the B/A value is much greater than 1.04, which will affect the electrochemical performance of the electrode sheet.

In the electrode sheet of the present application, the binder content of the electrode sheet is controlled so that the electrode sheet satisfies: 1<B/A≤1.04, which can effectively improve the problem of the enrichment of the binder on the surface of the active material layer, improve the surface porosity of the electrode sheet, and avoid the densification of the surface layer of the electrode sheet, thereby improving the cycling performance and dynamic performance of the secondary battery.

The above B/A value may be 1.01, 1.02, 1.03 or 1.04. Further, the electrode sheet satisfies: 1.01≤B/A≤1.03.

In some of the embodiments, the thickness of the active material layer on one side is 40 µm to 180 µm. By controlling the B/A value of the electrode sheet within the above range, the thickness of the active material layer on one side of the electrode sheet according to the embodiment of the present application can reach 180 µm, which can avoid the problem that the electrolyte solution wettability of the electrode sheet becomes worse due to the increase of the thickness of the active material layer, so that a thick electrode sheet with high energy density can be obtained. Optionally, the thickness of the active material layer is 40 µm to 60 µm, 60 µm to 80 µm, 80 µm to 100 µm, 100 µm to 120 µm, 120 µm to 150 µm, 150 µm to 160 µm, or 160 µm to 180 µm.

In some of the embodiments, the porosity of the first region of the active material layer is 25% to 30%. By controlling the B/A value of the electrode sheet within the above range, the porosity of the first region of the active material layer, that is, the surface layer of the electrode sheet is relatively high, which is conducive to electrolyte solution wetting and ion transmission.

In some of the embodiments, the porosity of the second region of the active material layer is 25% to 30%. By controlling the B/A value of the electrode sheet within the above range, the porosity of the second region of the active material layer is close to the porosity of the first region, which is conducive to electrolyte solution wetting and ion transport.

Understandably, porosity refers to the percentage of the internal pore volume of a material to its total volume. In this embodiment, the cross section of the active material layer is imaged by a scanning electron microscope (SEM), and the porosity of the first region and the second region of the active material layer can be obtained through analysis by AVIZO software.

In some of the embodiments, in the thickness direction of the active material layer, the porosity gradient decreases from the side of the active material layer close to the current collector to the side of the active material layer away from the current collector.

In some of the embodiments, the porosity of the first region of the active material layer differs by <_5% from the porosity of the second region of the active material layer. Optionally, the porosity of the first region of the active material layer differs from the porosity of the second region of the active material layer by <_5%, ≤4%, ≤3%, ≤2% or≤1%.

In some of the embodiments, the porosity of the first region of the active material layer is the same as the porosity of the second region of the active material layer. In some embodiments, in the thickness direction of the active material layer, the porosity gradient of the active material layer remains the same from the side of the active material layer close to the current collector to the side of the active material layer away from the current collector. At this time, the surface layer of the electrode sheet has a relatively high porosity, which can improve the electrolyte solution wettability and ion transmission of the electrode sheet, resulting in good dynamic performance of the electrode sheet.

In some of the embodiments, the active material layer is self-supporting, which helps to improve the cycling stability of the battery. Self-supporting refers to the ability of the active material layer to maintain mechanical integrity in the absence of a current collector.

In some of the embodiments, the tensile strength of the active material layer is 0.03 MPa to 1 MPa. Optionally, the tensile strength of the active material layer is 0.03 MPa, 0.1 MPa, 0.2 MPa, 0.3 MPa, 0.4 MPa, 0.5 MPa, 0.6 MPa, 0.7 MPa, 0.8 MPa, 0.9 MPa or 1 MPa. Preferably, the tensile strength of the active material layer is 0.05 MPa to 0.5 MPa. The above-mentioned active material layer has a suitable tensile strength, and the mechanical properties of the electrode sheet are good, and it is not easy to be pulverized and broken to cause the deterioration of the electrode sheet, which helps to improve the cycling stability of the electrode sheet.

In some of the embodiments, the electrode sheet is a positive electrode sheet; in the active material layer, the binder includes at least one of polyvinylidene fluoride (PVDF), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resin. Further, the electrode sheet is a positive electrode sheet; in the active material layer, the binder includes polyvinylidene fluoride (PVDF).

In some of the embodiments, the electrode sheet is a negative electrode sheet; in the active material layer, the binder includes a polymer with a polar functional group.

In some of the embodiments, the polar functional group is selected from at least one of carboxyl, cyano and amino. The polymer comprising the above-mentioned polar functional group has good adhesion, which is beneficial to the preparation of electrode sheets.

In some of the embodiments, the weight average molecular weight of the polymer is ≥ 200,000. The mechanical strength of the active material layer can be further improved by using a polymer with a weight average molecular weight ≥ 200,000 as a binder.

In some of the embodiments, the polymer is selected from at least one of chain polymers and cross-network polymers. By selecting a chain polymer or a cross-linked polymer, the binder can wrap and fix the material of the active material layer, further improving the binder floating ratio of the electrode sheet, and improving the cycling performance and dynamic performance of the electrode sheet.

In some of the embodiments, the polymer is selected from at least one of polyacrylonitrile (PAN), polyacrylic acid (PAA), polyamide (PA), acrylic acid-acrylonitrile copolymer and derivatives thereof, acrylic acid-acrylate copolymer and derivatives thereof, acrylic acid-acrylamide copolymer and derivatives thereof. Further, the electrode sheet is a negative electrode sheet; in the active material layer, the binder is polyacrylic acid-acrylonitrile copolymer.

In some of the embodiments, the mass percentage of the binder in the active material layer is 0.5% to 5%. Optionally, the mass percentage of the binder in the active material layer is 0.5%, 1%, 1.5%, 2%, 2.5%, 3%, 3.5%, 4%, 4.5% or 5%. By controlling the content of the binder within the above range, good bonding and molding effects can be achieved, and the adhesive force between the active material layer and the current collector is strong.

In some of the embodiments, the active material layer further includes an additive, and the additive includes at least one of polytetrafluoroethylene (PTFE), polyethylene (PE), polypropylene (PP) and polyacrylonitrile (PAN). Optionally, the mass percentage of the additive in the active material layer is ≤2%. By adding the above-mentioned specific additive, the distribution uniformity of components of the active material layer can be further improved, and at the same time, the preparation of the active material layer can be facilitated. Optionally, the mass percentage of the additive in the active material layer is 0.2% to 2%, for example, the mass percentage of the additive can be 0.4%, 0.5%, 0.6%, 0.8%, 1%, 1.2%, 1.5%, 1.8% % or 2%.

An embodiment of the present application further provides a method for preparing the above-mentioned electrode sheet, which includes steps S1 to S3 as follows:
Step S1: preparing an electrode sheet slurry with a solid content greater than or equal to 65%; optionally, the solid content of the electrode sheet slurry is 65%, 70%, 75%, 80%, 85%, 90% or 95%.
Step S2: extruding the electrode sheet slurry to prepare an active material layer.
Step S3: compounding the active material layer with a current collector to prepare the electrode sheet.

According to the above-mentioned method for preparing the electrode sheet, by controlling the solid content of the electrode sheet slurry to be greater than or equal to 65%, and adopting a suitable preparation process, the problem of binder floating during the preparation process can be effectively suppressed. When the electrode sheet satisfies 1<B/A ≤1.04, the prepared electrode sheet has good electrolyte solution wettability and ion conductivity, which is conducive to improving the cycling performance and dynamic performance of the secondary battery.

In some of the embodiments, the electrode sheet is a negative electrode sheet, and the solid content of the electrode sheet slurry is 68% to 74%.

In some of the embodiments, the electrode sheet is a positive electrode sheet, and the solid content of the electrode sheet slurry is 75% to 80%.

In some of the embodiments, the solid content of the electrode sheet slurry includes, by mass percentage, 0.5% to 5% of the binder and 0 to 2% of the additive.

In some of the embodiments, the electrode sheet slurry is prepared by a kneading process. Specifically, in step S1, the electrode sheet slurry is prepared as follows: mixing the active material, conductive agent, and additive to prepare a dry powder mixture, and preparing the binder into a glue solution; mixing the dry powder mixture and the glue solution, and kneading the mixture into a lump material with a solid content of 65% to 95%, which is the electrode sheet slurry in the embodiment of the present application.

In some of the embodiments, step S2 specifically includes: extruding the lump material prepared in step S 1 to obtain a slurry film layer; then rolling and thinning the slurry film layer to prepare an active material layer with a preset thickness and compaction density.

In some of the embodiments, in the step of compounding the active material layer and the current collector in step S3, the active material layer can be transferred to the surface of the current collector by roller pressing to bond the active material layer and the current collector to obtain an electrode sheet.

The secondary battery, battery module, battery pack and electrical apparatus of the present application will be described hereafter with appropriate reference to the drawings.

In an embodiment of the present application, a secondary battery is provided.

Generally, the secondary battery includes a positive electrode sheet, a negative electrode sheet, an electrolyte, and a separator. During the charging and discharging process of the battery, active ions are intercalated and deintercalated back and forth between the positive electrode sheet and the negative electrode sheet. The electrolyte plays the role of conduct ions between the positive electrode sheet and the negative electrode sheet. The separator is provided between the positive electrode sheet and the negative electrode sheet, and mainly functions to prevent a short circuit between the positive electrode and the negative electrode while allowing ions to pass through.

In the embodiment of the present application, the negative electrode sheet and/or positive electrode sheet of the secondary battery adopt the above-mentioned electrode sheet. Optionally, the electrode sheet is made by the above-mentioned preparation method.

### Positive electrode sheet

The positive electrode sheet comprises a positive electrode current collector and a positive electrode active material layer provided on at least one surface of the positive electrode current collector, wherein the positive electrode active material layer comprises a positive electrode active material.

As an example, the positive electrode current collector has two opposite surfaces in its own thickness direction, and the positive electrode active material layer is provided on either one or both of the two opposite surfaces of the positive electrode current collector.

In some of the embodiments, the positive electrode current collector can be a metal foil or a composite current collector. For example, an aluminum foil can be used as the metal foil. The composite current collector may include a high molecular material substrate layer and a metal layer formed on at least one surface of the high molecular material substrate layer. The composite current collector can be formed by forming metal materials such as aluminum, aluminum alloy, nickel, nickel alloy, titanium, titanium alloy, silver and silver alloy on a high molecular material substrate. The high molecular material substrate layer includes polypropylene (PP), polyethylene terephthalate (PET), polybutylene terephthalate (PBT), polystyrene (PS), polyethylene (PE) and other substrates.

In some of the embodiments, the positive electrode active material may be a positive electrode active material for batteries well known in the art. As an example, the positive electrode active material may include at least one of the following materials: lithium-containing phosphate with olivine structure, lithium transition metal oxide, and their respective modified compounds. However, the present application is not limited to these materials, and other conventional materials useful as positive electrode active materials for batteries can also be used. It is possible to use only one of these positive electrode active materials alone, or to use more than two in combination. Here, examples of the lithium transition metal oxide may include, but are not limited to, at least one of a lithium-cobalt oxide (such as LiCoO₂), lithium-nickel oxide (such as LiNiO₂), lithium-manganese oxide (such as LiMnO₂ and LiMn₂O₄), lithium-nickel-cobalt oxide, lithium-manganese-cobalt oxide, lithium-nickel-manganese oxide, lithium-nickel-cobalt-manganese oxide (such as LiNi_{1/3}Co_{1/3}Mn_{1/3}O₂ (also abbreviated as NCM₃₃₃), LiNi_{0.5}Co_{0.2}Mn_{0.3}O₂ (also abbreviated as NCM₅₂₃), LiNi0_{.5}Co_{0.25}Mn_{0.25}O₂ (also abbreviated as NCM₂₁₁), LiNi_{0.6}Co_{0.2}Mn_{0.2}O₂ (also abbreviated as NCM₆₂₂), LiNi_{0.8}Co_{0.1}Mn_{0.1}O₂ (also abbreviated as NCM₈₁₁), lithium-nickel-cobalt-aluminum oxide (such as LiNi_{0.85}Co_{0.15}Al_{0.05}O₂) and their respective modified compounds. Examples of the lithium-containing phosphate with olivine structure may include, but are not limited to, at least one of lithium iron phosphate (such as LiFePO₄ (also abbreviated as LFP)), lithium iron phosphate-carbon composite, lithium manganese phosphate (such as LiMnPO₄), lithium manganese phosphate-carbon composite, lithium manganese iron phosphate, and lithium manganese iron phosphate-carbon composite.

In some of the embodiments, the positive electrode active material layer may further optionally include a binder. As an example, the binder may include at least one of polyvinylidene fluoride (PVDF), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorinated acrylate resin.

In some of the embodiments, the positive electrode active material layer may further optionally include a conductive agent. As an example, the conductive agent may include at least one of superconducting carbon, acetylene black, carbon black, Ketjen black, carbon dots, carbon nanotubes, graphene, and carbon nanofibers.

In some of the embodiments, the positive electrode sheet is the above-mentioned electrode sheet.

In some of the embodiments, the positive electrode sheet can be prepared by the above-mentioned preparation method of the electrode sheet.

### Negative electrode sheet

The negative electrode sheet includes a negative electrode current collector and a negative electrode active material layer provided on at least one surface of the negative electrode current collector, and the negative electrode active material layer includes a negative electrode active material.

As an example, the negative electrode current collector has two opposite surfaces in its own thickness direction, and the negative electrode active material layer is provided on either one or both of the two opposite surfaces of the negative electrode current collector.

In some of the embodiments, the negative electrode current collector can be a metal foil or a composite current collector. For example, a copper foil can be used as the metal foil. The composite current collector may include a high molecular material substrate layer and a metal layer formed on at least one surface of the high molecular material substrate. The composite current collector can be formed by forming metal materials such as copper, copper alloy, nickel, nickel alloy, titanium, titanium alloy, silver and silver alloy on a high molecular material substrate. The high molecular material substrate layer includes polypropylene (PP), polyethylene terephthalate (PET), polybutylene terephthalate (PBT), polystyrene (PS), polyethylene (PE) and other substrates.

In some of the embodiments, the negative electrode active material may be a negative electrode active material for batteries well known in the art. As an example, the negative electrode active material may include at least one of the following materials: artificial graphite, natural graphite, soft carbon, hard carbon, silicon-based material, tin-based material, and lithium titanate, etc. The silicon-based material may be selected from at least one of elemental silicon, a silicon-oxygen compound, a silicon-carbon composite, a silicon-nitrogen composite, and a silicon alloy. The tin-based material may be at least one selected from elemental tin, a tin-oxygen compound, and a tin alloy. However, the present application is not limited to these materials, and other conventional materials useful as negative electrode active materials for batteries can also be used. It is possible to use only one of these negative electrode active materials alone, or to use more than two in combination.

In some of the embodiments, the negative electrode sheet is the above-mentioned electrode sheet; the binder includes a polymer with a polar functional group. Optionally, the weight average molecular weight of the polymer is ≥ 200,000. Optionally, the polymer is selected from at least one of polyacrylonitrile (PAN), polyacrylic acid (PAA), polyamide (PA), acrylic acid-acrylonitrile copolymer and derivatives thereof, acrylic acid-acrylate copolymer and derivatives thereof, acrylic acid-acrylamide copolymer and derivatives thereof.

Optionally, the binder may further include at least one of styrene butadiene rubber (SBR), sodium polyacrylate (PAAS), polyacrylamide (PAM), polyvinyl alcohol (PVA), sodium alginate (SA), polymethacrylic acid (PMAA), and carboxymethyl chitosan (CMCS).

In some of the embodiments, the negative electrode active material layer may further optionally include a conductive agent. The conductive agent may be selected from at least one of superconducting carbon, acetylene black, carbon black, Ketjen black, carbon dots, carbon nanotubes, graphene, and carbon nanofibers.

In some of the embodiments, the negative electrode active material layer may further optionally include other additives, such as thickeners (e.g., sodium carboxymethyl cellulose (CMC-Na)), etc.

In some of the embodiments, the negative electrode sheet can be prepared by the above-mentioned preparation method of the electrode sheet.

### Electrolyte

The electrolyte plays the role of conduct ions between the positive electrode sheet and the negative electrode sheet. The type of the electrolyte is not particularly limited in the present application, and can be selected according to requirements. For example, the electrolyte may be in a liquid, gel, or all-solid state.

In some of the embodiments, the electrolyte is an electrolyte solution. The electrolyte solution comprises an electrolyte salt and a solvent.

In some of the embodiments, the electrolyte salt may be selected from at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalato)borate, lithium difluoro bis(oxalato)phosphate, and lithium tetrafluoro(oxalato)phosphate.

In some of the embodiments, the solvent may be at least one selected from ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate ethyl propionate, propyl propionate, methyl butyrate, ethyl butyrate, 1,4-butyrolactone, sulfolane, dimethyl sulfone, methyl ethyl sulfone and diethyl sulfone.

In some of the embodiments, the electrolyte solution further optionally comprises an additive. For example, the additive may include a negative electrode film-forming additive, positive electrode film-forming additive, and may also include additives that can improve certain battery properties, such as additives that improve battery overcharge performance, additives that improve battery high or low temperature performance, and the like.

### Separator

In some of the embodiments, the secondary battery also comprises a separator. The type of the separator is not particularly limited in the present application, and any well-known separator with a porous structure having good chemical stability and mechanical stability may be selected.

In some of the embodiments, the material of the separator can be selected from at least one of glass fiber, non-woven cloth, polyethylene, polypropylene, and polyvinylidene fluoride. The separator may be a single-layer film or a multi-layer composite film, which is not particularly limited. When the separator is a multi-layer composite film, the material of each layer may be the same or different, which is not particularly limited.

In some of the embodiments, the positive electrode sheet, the negative electrode sheet and the separator can be made into an electrode assembly by a winding process or a stacking process.

In some of the embodiments, the secondary battery may include an outer package. The outer package can be used to encapsulate the above-mentioned electrode assembly and electrolyte.

In some of the embodiments, the outer package of the secondary battery may be a hard shell, e.g., a hard plastic shell, an aluminum shell, a steel shell, etc. The outer package of the secondary battery may also be a soft pack, such as a bag-type soft pack. The material of the soft package can be plastic, and as plastic, polypropylene, polybutylene terephthalate, and polybutylene succinate can be enumerated.

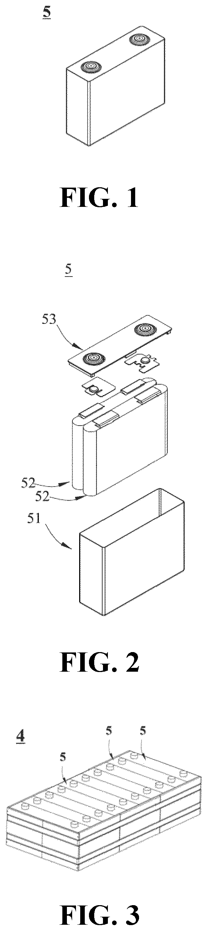

The present application has no particular limitation on the shape of the secondary battery, which can be cylindrical, square or any other shape. For example, Fig. 1 shows a secondary battery 5 with a square structure as an example.

In some of the embodiments, referring to Fig. 2, the outer package can include a case 51 and a cover plate 53. Here, the case 51 can include a bottom plate and a side plate connected to the bottom plate, with the bottom plate and the side plate enclosing to form an accommodating cavity. The case 51 has an opening in communication with the accommodating cavity, and the cover plate 53 can cover the opening to close the accommodating cavity. The positive electrode sheet, the negative electrode sheet, and the separator may be formed into an electrode assembly 52 by a winding process or a stacking process. The electrode assembly 52 is encapsulated within the accommodating cavity. The electrolyte solution impregnates the electrode assembly 52. The number of electrode assemblies 52 comprised in the secondary battery 5 may be one or more, which can be selected by those skilled in the art according to specific actual requirements.

In some of the embodiments, the secondary batteries may be assembled into a battery module, and the number of the secondary batteries included in the battery module may be one or more, and the specific number may be selected by those skilled in the art according to the present application and capacity of the battery module.

Fig. 3 shows a battery module 4 as an example. Referring to Fig. 3, in the battery module 4, a plurality of secondary batteries 5 can be sequentially provided along the length direction of the battery module 4. Of course, any other arrangements are also possible. The plurality of secondary batteries 5 may further be fixed by fasteners.

Optionally, the battery module 4 can further include a shell having an accommodating space, in which the plurality of secondary batteries 5 are accommodated.

In some of the embodiments, the battery module may further be assembled into a battery pack, the number of battery module contained in the battery pack may be one or more, and the specific number can be selected by those skilled in the art according to the use and capacity of the battery pack.

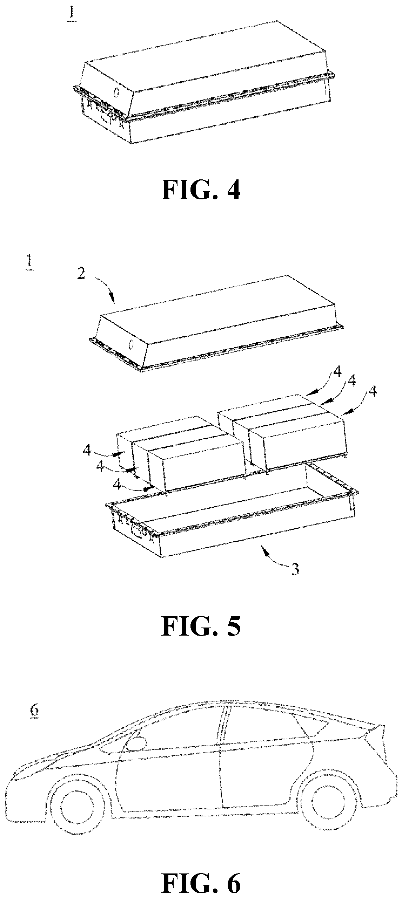

Figs. 4 and 5 show a battery pack 1 as an example. Referring to Figs. 4 and 5, the battery pack 1 may comprise a battery box and a plurality of battery modules 4 provided in the battery box. The battery box includes an upper box body 2 and a lower box body 3, the upper box body 2 can cover the lower box body 3 to form a closed space for accommodating the battery modules 4. The plurality of battery modules 4 may be provided in the battery box in any manner.

In addition, the present application further provides an electrical apparatus, and the electrical apparatus includes at least one of the secondary batteries, the battery module, or the battery pack provided in the present application. The secondary battery, battery module, or battery pack may be used as a power source for the electrical apparatus, and may also be used as an energy storage unit for the electrical apparatus. Electrical apparatus may include mobile devices, electric vehicles, electric trains, ships and satellites, energy storage systems, etc., but are not limited thereto. Among them, the mobile device may be, for example, a mobile phone and a laptop; the electric vehicle may be, for example, an all-electric vehicle, a hybrid electric vehicle, a plug-in hybrid electric vehicle, an electric bicycle, an electric scooter, an electric golf cart, and an electric truck, but is not limited thereto.

For the electrical apparatus, the secondary battery, the battery module, or the battery pack can be selected according to its use requirements.

Fig. 6 is an example of an electrical apparatus 6. This electrical apparatus 6 is an all-electric vehicle, a hybrid electric vehicle, or a plug-in hybrid electric vehicle, etc. In order to meet the requirements of the electrical apparatus for high power and high energy density of secondary batteries, a battery pack or a battery module may be used.

As another example, the apparatus may be a mobile phone, a tablet, a laptop, etc. The apparatus is generally required to be light and thin, and may use a secondary battery as a power source.

### Examples

Examples of the present application will be described hereinafter. The examples described below are exemplary and only used to explain the present application, and are not to be construed as limiting the present application. Where specific techniques or conditions are not specified in the examples, the techniques or conditions described in the literatures of the art or the product specifications are followed. All of the used agents or instruments which are not specified with the manufacturer are conventional commercially-available products.

### Example 1:

### Preparation of positive electrode sheet:

The positive electrode active material lithium iron phosphate, PVDF (polyvinylidene fluoride) and SP (conductive carbon black) at a mass ratio of 95:3:2 were dispersed in NMP (N-methyl pyrrolidone) solvent system, stirred and mixed evenly to obtain a positive electrode slurry with a solid content of 65%. The positive electrode slurry was coated on the two surfaces of the current collector aluminum foil by extrusion coating or transfer coating, and then subjected to roller pressing, oven drying, cold pressing and other processes to obtain the positive electrode sheet. The thickness of the positive electrode active material layer on one side was 106 µm.

### Preparation of negative electrode sheet:

In the negative electrode active material layer, the mass ratio of artificial graphite, acrylic acid-acrylonitrile copolymer and SP (conductive carbon black) was 95:3:2.

The negative electrode active material artificial graphite was dry-mixed with SP (conductive carbon black) in a powder ribbon mixer to obtain a mixed powder; the acrylic acid-acrylonitrile copolymer and deionized water were mixed to prepare a glue solution; the powder and glue solution were put into a kneader to knead for 30 min to obtain a negative electrode slurry with a solid content of 65%; the positive electrode slurry was extruded through an extruder to obtain a negative electrode active material layer film, and a negative electrode active material layer with a preset thickness was obtained through rolling and thinning; the edge of the film layer was cut off using a cutter, the film layer was transferred to the two surfaces of the current collector copper foil by pressure printing, and dried to obtain the negative electrode sheet. The thickness of the negative electrode active material layer on one side was 79 µm.

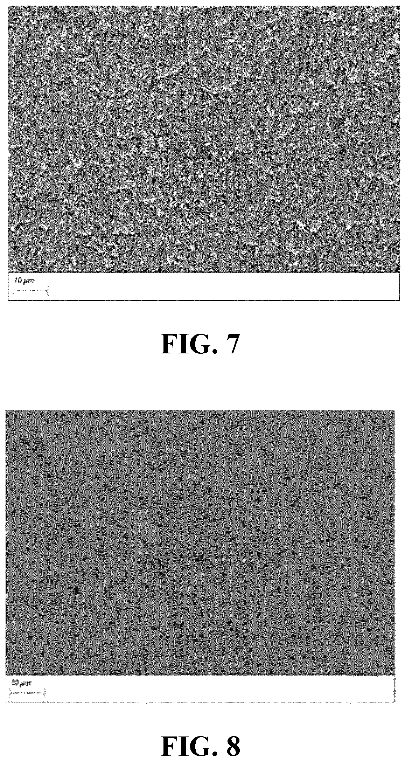

Referring to Fig. 7 which is a scanning electron microscopy (SEM) image of the surface of the negative electrode sheet of Example 1. It can be seen from the figure that the surface of the negative electrode sheet prepared in Example 1 was rich in pores.

Separator: A PE porous polymer film was used as the separator.

Electrolyte solution: In an argon glove box with a water content of <10 ppm, isometric ethylene carbonate (EC) and ethyl methyl carbonate (EMC) in a volume ratio of 3:7 were mixed to obtain an organic solvent, and then1mol/L LiPF₆ was evenly dissolved in the organic solvent to obtain the electrolyte solution.

### Preparation of secondary battery:

The positive electrode sheet, the separator and the negative electrode sheet were stacked in order, so that the separator was positioned between the positive and negative electrode sheets to separate them; and then they were wound to obtain an electrode assembly, the electrode assembly was put into an outer package and dried, and then the electrolyte solution was injected thereto; thereafter, the secondary battery was obtained through processes such as formation and standing.

The preparation methods of Examples 2 to 5 are similar to that of Example 1, except that the solid content of the negative electrode slurry is adjusted so that B/A is within the scope of the present application. See Table 1 for details.

### Example 6:

### Preparation of positive electrode sheet:

In the positive electrode active material layer, the mass ratio of lithium iron phosphate, PVDF (polyvinylidene fluoride), and SP (conductive carbon black) was 95:3:2.

The positive electrode active material lithium iron phosphate and SP (conductive carbon black) were dry-mixed in a powder ribbon mixer to obtain a mixed powder; PVDF (polyvinylidene fluoride) was dissolved in NMP (N-methyl pyrrolidone) to prepare a glue solution. The powder and glue solution were added into a kneader to knead for 30 min to obtain a positive electrode slurry with a solid content of 75%; the positive electrode slurry was extruded through an extruder to obtain a positive electrode active material layer film, and a positive electrode active material layer with a preset thickness was obtained through rolling and thinning; the edge of the film layer was cut off using a cutter, the film layer was transferred to the two surfaces of the current collector aluminum foil by pressure printing, and dried to obtain the positive electrode sheet. The thickness of the positive electrode active material layer on one side was 106 µm.

### Preparation of negative electrode sheet:

The negative electrode active material artificial graphite, acrylic acid-acrylonitrile copolymer and SP (conductive carbon black) at a mass ratio of 95:3:2 were dispersed in deionized water, stirred and mixed evenly to obtain a negative electrode slurry with a solid content of 55%. The positive electrode slurry was coated on the two surfaces of the current collector copper foil by extrusion coating or transfer coating, and then subjected to roller pressing, oven drying, cold pressing and other processes to obtain the negative electrode sheet. The thickness of the negative electrode active material layer on one side was 79 µm.

The preparation methods of Examples 7 to 12 are similar to that of Example 1, except that the solid content of the positive electrode slurry is adjusted so that B/A is within the scope of the present application. See Table 1 for details.

### Example 13:

Example 13 is similar to the method of Example 3, the difference is only in:
Preparation of negative electrode sheet: the mass ratio of artificial graphite, acrylic acid-acrylonitrile copolymer, SP (conductive carbon black) and PTFE (polytetrafluoroethylene) was 94.8:3:2:0.2. Artificial graphite, the negative electrode active material, was dry-mixed with SP (conductive carbon black) and PTFE (polytetrafluoroethylene) in a powder ribbon mixer to obtain a mixed powder.

### Example 14:

Example 14 is similar to the method of Example 8, the difference is only in:
Preparation of positive electrode sheet: the mass ratio of lithium iron phosphate, PVDF (polyvinylidene fluoride), SP (conductive carbon black), and PTFE (polytetrafluoroethylene) was 94.8:3:2:0.2. Lithium iron phosphate, the positive electrode active material, was dry-mixed with SP (conductive carbon black) and PTFE (polytetrafluoroethylene) in a powder ribbon mixer to obtain a mixed powder.

### Comparative Example 1:

The difference between Comparative Example 1 and Example 1 lies in the preparation of the negative electrode sheet.

Negative electrode sheet: The negative electrode active materials artificial graphite, acrylic acid-acrylonitrile copolymer and SP (conductive carbon black) at a mass ratio of 95:3:2 were dispersed in deionized water, stirred and mixed evenly to obtain a negative electrode slurry with a solid content of 55%. The negative electrode slurry was coated onto the current collector copper foil by extrusion coating or transfer coating, and then subjected to roller pressing, oven drying, cold pressing and other processes to obtain the negative electrode sheet. The thickness of the negative electrode active material layer on one side was 79 µm.

Referring to Fig. 8 which is a scanning electron microscopy (SEM) image of the surface of the negative electrode sheet of Comparative Example 1. It can be seen from the figure that the surface of the negative electrode sheet prepared in Comparative Example 1 was densified with less pores.

### Tests:

(1) Binder content test:
   10 to 30 mg of powder was scraped from the outer surface (away from the current collector) side of the electrode sheet in the range of 1/2 of the thickness of the active material layer to be used as a sample of the second region; 10 to 30 mg of powder was scraped from the inner surface (near the current collector) side of the electrode sheet in the range of 1/2 of the thickness of the active material layer to be used as a sample of the first region. The sample was put into an Al₂O₃ crucible and spread flat, the crucible lid was covered, and the sample was tested by differential scanning thermogravimetric analysis. The parameters were set as follows: nitrogen atmosphere, purge gas flow rate 60 mL/min, protective gas flow rate 20 mL/min, temperature range 35 to 600°C, heating rate 10 to 30°C. The experiment was carried out. The difference in sample mass before and after heating was evaluated by using an electronic balance with an accuracy of 1/10,000 to obtain a curve of weight loss rate versus temperature, so as to determine the binder content of the sample (the binder content of the first region is denoted as A, and that of the second region is denoted as B). Then, the B/A value of the electrode sheet can be calculated.
(2) Electrode sheet porosity test:
   The electrode sheets prepared in the examples and comparative example were taken, and the three-dimensional reconstruction of the sliced morphology of the active material layer was carried out through a dual-beam focused ion beam microscope (FIB-SEM Zeiss Crossbeam 540), and the sample was sliced by the focused ion beam (FIB). Then, the surface topography of the slice was taken by using a scanning electron microscope (SEM) to collect data. Three-dimensional reconstruction was conducted using Avizo software, and the porosity information of the first region and the second region was extracted using the Volume Fraction calculation module.
(3) Tensile strength test: Instron metal tensile testing machine was used for testing. The specific steps include: cutting the active material layer of the electrode sheet into a test sample with a length of 100 mm, a width of 20 mm, and a thickness of 1 mm, and testing the tensile strength using a tensile testing machine at 2 mm/min.
(4) Cycling performance test:
   At 25°C, the secondary batteries prepared in the examples and comparative example were charged at constant current of 1C rate to charge cut-off voltage of 3.6, then charged at constant voltage to a current of ≤0.05 C, left to stand for 5 min, then discharged at constant current of 0.33C rate to discharge cut-off voltage of 2.5, and left to stand for 5 min. This was a charge-discharge cycle. The battery was tested for charge and discharge cycles by this method until the battery capacity decayed to 80%. The number of cycles at this time is the cycle life of the battery at 25°C.
(5) Charging-discharging rate performance test

2C charging capacity retention rate: At 25°C, the secondary battery of each of the examples and comparative example was charged to 3.60V at constant current of 0.33C, then charged at constant voltage until the current was 0.05C, and then left to stand for 5 min. The charging capacity at this time was recorded, which was the first charging capacity. The battery was left to stand for 5 min, then discharged to 2.5V at constant current of 0.33C rate, and left to stand for 30 min. Then, the secondary battery was charged to 3.6V at constant current of 2C rate, then charged at constant voltage to a current of 0.05C, left to stand for 5 min, and the charging capacity at this time was recorded. Capacity retention rate (%) of battery at 2C charging rate = 2C charging capacity/0.33C charging capacity×100%.

2C discharge capacity retention rate: At 25°C, the secondary battery of each of the examples and comparative example was discharged to 2.5V at 0.33C rate, then charged at constant current to 3.60V and then switched to constant voltage charging. When the charging current decreased to 0.05C, the constant voltage charging ended. The battery was left to stand for 5 min, and then discharged to 2.5V at 0.33C. The discharge capacity at this time was recorded, which was the first discharge capacity. The battery was left to stand for 30 min, charged to 3.60V at constant current of 0.33C, and then switched to constant voltage charging. when the charging current decreased to 0.05C, constant voltage charging ended. The battery was left to stand for 5 min, discharged at 2C to 2.5V, and the discharge capacity at this time was recorded. Capacity retention rate (%) of battery at 2C discharging rate = 2C discharge capacity/0.33C discharge capacity×100%.

Table 1 The slurry solid content and B/A value of the electrode sheets of Examples 1 to 14 and Comparative Example 1, and the cycling performance and charge-discharge performance of the secondary battery.

| Serial Number | Slurry solid content | | B/A | | Cycling performance/cycle | 2C Discharge performance | 2C Charge performance |
|---|---|---|---|---|---|---|---|
| | Positive electrode | Negative electrode | Positive electrode | Negative electrode | | | |
| Example 1 | 65% | 65% | 1.08 | 1.04 | 1065 | 68% | 57% |
| Example 2 | 65% | 68% | 1.08 | 1.03 | 1123 | 70% | 61% |
| Example 3 | 65% | 70% | 1.08 | 1.03 | 1209 | 71% | 63% |
| Example 4 | 65% | 74% | 1.08 | 1.02 | 1137 | 69% | 58% |
| Example 5 | 65% | 80% | 1.08 | 1.01 | 1058 | 68% | 57% |
| Example 6 | 65% | 55% | 1.04 | 1.15 | 987 | 68% | 57% |
| Example 7 | 70% | 55% | 1.04 | 1.15 | 1047 | 68% | 58% |
| Example 8 | 75% | 55% | 1.03 | 1.15 | 1294 | 70% | 61% |
| Example 9 | 80% | 55% | 1.03 | 1.15 | 1206 | 69% | 59% |
| Example 10 | 85% | 55% | 1.02 | 1.15 | 1094 | 68% | 58% |
| Example 11 | 90% | 55% | 1.01 | 1.15 | 1028 | 68% | 56% |
| Example 12 | 95% | 55% | 1.01 | 1.15 | 874 | 67% | 56% |
| Example 13 | 65% | 70% | 1.08 | 1.03 | 1213 | 72% | 64% |
| Example 14 | 75% | 55% | 1.03 | 1.15 | 1298 | 71% | 62% |
| Comparative Example 1 | 65% | 55% | 1.08 | 1.15 | 853 | 66% | 54% |

It can be seen from the relevant data in Table 1 that in the secondary battery of Comparative Example 1, the positive electrode sheet and the negative electrode sheet were both prepared by the traditional wet coating method, and the B/A values of the positive electrode sheet and the negative electrode sheet were 1.08 and 1.15 respectively; for the secondary battery of Comparative Example 1, the number of cycles was 853, the discharge capacity retention rate at 2 C was 66%, and the charging capacity retention rate at 2C was 54%. In the secondary batteries of Examples 1 to 14, the positive electrode sheet or the negative electrode sheet adopted the electrode sheet provided by the present application, the electrode sheet satisfied 1<B/A≤1.04, the cycle number of the secondary battery was 873 to 1298, the discharge capacity retention rate at 2C was 67% to 72%, the charging capacity retention rate at 2C was 56% to 64%, and the cycling performance and charge-discharge performance of the secondary battery were improved compared with those of the secondary battery of Comparative Example 1.

It can be seen from Examples 1 to 12 that increasing the solid content of the electrode sheet slurry in the range of 65% to 95% could reduce the B/A value of the electrode sheet, and when the B/A value of the electrode sheet was between 1.01 and 1.03, the cycling performance and charge-discharge performance of the secondary battery were better.

A small amount of PTFE was added to the negative electrode sheet of Example 13 and the positive electrode sheet of Example 14, and the tensile strength of the slurry was better during the preparation process, which was conducive to the extrusion of the slurry; and the secondary batteries of both Examples 13 and 14 had good cycling performance and charge-discharge performance.

The technical features of the above-mentioned examples can be combined arbitrarily. In order to make the description concise, not all possible combinations of the technical features in the above examples are described. However, all the combinations of the technical features should be considered as falling within the scope described in this specification provided that they do not conflict with each other.

The above examples only describe several embodiments of the present application, and the description thereof is specific and detailed, but cannot therefore be understood as a limitation on the patent scope of the present application. It should be noted that those of ordinary skill in the art may further make variations and improvements without departing from the concept of the present application, all of which fall within the protection scope of the present application. Therefore, the patent protection scope of the present application should be subject to the appended claims.

## Claims

1. A secondary battery including an electrode sheet, the electrode sheet including
a current collector; and
an active material layer provided on at least one surface of the current collector; the active material layer is divided into a first region and a second region in its thickness direction;
the first region is located in a direction close to the surface of the current collector, the thickness of the first region accounts for 1/2 of the thickness of the active material layer, and the binder content of the first region is denoted as A;
the second region is located in a direction away from the surface of the current collector, the thickness of the second region accounts for 1/2 of the thickness of the active material layer, and the binder content of the first region is denoted as B;
the electrode sheet satisfies: 1<B/A≤1.04.

2. The secondary battery according to claim 1, wherein the electrode sheet satisfies: 1.01≤B/A≤1.03.

3. The secondary battery according to claim 1 or 2, wherein the thickness of the active material layer is 40 µm to 180 µm; optionally, the thickness of the active material layer is 60 µm to 100 µm.

4. The secondary battery according to any one of claims 1 to 3, wherein,
the porosity of the first region is 25% to 30%; and/or,
the porosity of the second region is 25% to 30%.

5. The secondary battery according to any one of claims 1 to 4, wherein the difference between the porosity of the first region and the porosity of the second region is ≤ 5%.

6. The secondary battery according to any one of claims 1 to 5, wherein the porosity of the first region is the same as the porosity of the second region.

7. The secondary battery according to any one of claims 1 to 6, wherein the active material layer is self-supporting.

8. The secondary battery according to any one of claims 1 to 7, wherein the tensile strength of the active material layer is 0.03 MPa to 1 MPa; optionally, the tensile strength of the active material layer is 0.05 MPa to 0.5 MPa.

9. The secondary battery according to any one of claims 1 to 8, wherein the electrode sheet is a positive electrode sheet; in the active material layer, the binder includes at least one of polyvinylidene fluoride, vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer and fluorine-containing acrylate resin.

10. The secondary battery according to any one of claims 1 to 8, wherein the electrode sheet is a negative electrode sheet; in the active material layer, the binder includes a polymer having a polar functional group;
optionally, the polar functional group is selected from at least one of carboxyl, cyano and amino.

11. The secondary battery according to claim 10, wherein the weight average molecular weight of the polymer is ≥ 200,000; optionally, the weight average molecular weight of the polymer is 300,000 to 800,000.

12. The secondary battery according to claim 10 or 11, wherein the polymer is selected from at least one of chain polymers and cross-network polymers.

13. The secondary battery according to any one of claims 10 to 12, wherein the polymer is selected from at least one of polyacrylonitrile, polyacrylic acid, polyamide, acrylic acid-acrylonitrile copolymer and derivatives thereof, acrylic acid-acrylate copolymer and derivatives thereof, acrylic acid-acrylamide copolymer and derivatives thereof.

14. The secondary battery according to any one of claims 1 to 13, wherein in the active material layer, the mass percentage of the binder is 0.5% to 5%.

15. The secondary battery according to any one of claims 1 to 14, wherein the active material layer further includes an additive, and the additive includes at least one of polytetrafluoroethylene, polyethylene, polypropylene, and polyacrylonitrile; optionally, the mass percentage of the additive is ≤ 2%.

16. A method for preparing a secondary battery, comprising preparing an electrode sheet by the following steps:
preparing an electrode sheet slurry with a solid content greater than or equal to 65%;
extruding the electrode sheet slurry to prepare an active material layer; and
compounding the active material layer with a current collector to prepare the electrode sheet;
wherein an active material layer is provided on at least one surface of the current collector; the active material layer is divided into a first region and a second region in its thickness direction;
the first region is located in a direction close to the surface of the current collector, the thickness of the first region accounts for 1/2 of the thickness of the active material layer, and the binder content of the first region is denoted as A;
the second region is located in a direction away from the surface of the current collector, the thickness of the second region accounts for 1/2 of the thickness of the active material layer, and the binder content of the first region is denoted as B;
the electrode sheet satisfies: 1<B/A≤1.04.

17. The method for preparing a secondary battery according to claim 16, wherein the electrode sheet is a negative electrode sheet, and the solid content of the electrode sheet slurry is 68% to 74%.

18. The method for preparing a secondary battery according to claim 16, wherein the electrode sheet is a positive electrode sheet, and the solid content of the electrode sheet slurry is 75% to 80%.

19. An electrical apparatus, including the secondary battery according to any one of claims 1 to 15 or the secondary battery prepared by the method for preparing a secondary battery according to any one of claims 16 to 18.
